# EUROPEAN PATENT APPLICATION

(11) **EP 3 232 491 A1**
(43) Date of publication of application: **18.10.2017**
(21) Application number: 17163099.9
(22) Date of filing: 27.03.2017
(51) Int. Cl.: H01M 2/02, H01M 2/26, H01M 2/34, H01M 10/647, H01M 10/6556, H01M 10/613, H01M 10/6553

(54) **LITHIUM SECONDARY BATTERY**

(30) Priority: 11.04.2016 KR 20160044345
(71) Applicant: SK Innovation Co., Ltd., Seoul 03188 (KR)
(72) Inventor: KIM, Dong-Ju, 34124 Daejeon-si (KR); KIM, Jin-Go, 34124 Daejeon-si (KR); KIM, Tae-Il, 34124 Daejeon-si (KR); LEE, Seung-Noh, Daejeon-si, 34124 (KR)
(74) Representative: Stolmár & Partner Patentanwälte PartG mbB

(57) **Abstract**

A lithium secondary battery comprises an exterior case, a jelly roll housed in the exterior case, the jelly roll including a plurality of electrode plates and a separation layer interposed between the electrode plates, an electrode tab combining the electrode plates, and a conductive plate housed in the exterior case and electrically connected to the electrode tab.

## Description

### CROSS-REFERENCE TO RELATED APPLICATION

This application claims priority to Korean Patent Application No. 10-2016-0044345 filed on April 11, 2016 in the Korean Intellectual Property Office (KIPO), the entire disclosure of which is incorporated by reference herein.

### BACKGROUND

### 1. Field

Example embodiments relate to lithium secondary batteries.

### 2. Description of the Related Art

Recently, technologies of storing energy have been highlighted. For example, electro-chemical devices have been widely researched for being applied to a mobile phone, a camcorder, a laptop computer, etc. Among the electro-chemical devices, a lithium secondary battery which is capable of being charged and discharged repeatedly has been actively developed.

The lithium secondary battery is being developed as a power source for an electric vehicle (EV), a hybrid electric vehicle (HEV), or the like which has been proposed as alternatives for overcoming air pollution caused by conventional vehicles using fossil fuels such as gasoline or diesel.

In compact mobile devices, for example, two or three battery cells may be used per one device. However, in devices having relatively large dimensions such as an auxiliary power supply or an automobile, a battery module including a number of battery cells electrically connected to each other may be used for generating a high power output.

The battery module may be preferably fabricated to be small-scaled and light-weighted. Thus, a rectangular-type or pouch-type battery having a high integration degree and a small weight relative to a capacity thereof may be used as a battery cell (a unit battery) of a large scaled battery module.

The lithium secondary battery can be categorized into a lithium ion battery utilizing a liquid electrolyte and a lithium ion polymer battery utilizing a polymer solid electrolyte according to a type of an electrolyte. A pouch commonly used in the lithium ion polymer battery has a multi-layered structure including a polyolefin-based inner layer which is a thermal adhesive layer serving as a sealing member, a substrate for maintaining a mechanical strength, a metal thin layer such as an aluminum layer serving as a barrier layer against moisture and oxygen, and an external layer (e.g., a Nylon layer) serving as a substrate and a protection layer, which may be sequentially stacked.

The lithium secondary battery may be advantageous from an aspect of compatibility thereof and capacity capable of being obtained from relatively small volume and mass. However, when the pouch having the structure as described above is used, an inner short circuit may occur due to a nail or contaminant penetration into an electrode. In this case, the electrode having an active material coated thereon may be provided as a heat-generation source, and thus a safety issue including ignition or explosion in the battery may be caused.

Korean Patent Laid-Open Publication No. 2014-0032833 discloses a lithium secondary battery directed to achieve a safety improvement, however, fails to suggest measures to overcome the safety issue as mentioned above.

### SUMMARY

Accordingly, it is an aspect of the present invention to provide a lithium secondary battery having improved safety and reliability.

According to example embodiments, there is provided a lithium secondary battery comprising an exterior case, a jelly roll housed in the exterior case, the jelly roll including a plurality of electrode plates and a separation layer interposed between the electrode plates, an electrode tab combining the electrode plates, and a conductive plate housed in the exterior case, the conductive plate being electrically connected to the electrode tab.

In some embodiments, the conductive plate may be disposed on at least one lateral side of the jelly roll.

In some embodiments, the conductive plate may have a thermal conductivity.

In some embodiments, a thickness of the conductive plate may be in a range from 1 µm to 20µm.

In some embodiments, the conductive plate may include a plurality of through holes.

In some embodiments, the lithium secondary battery may be a pouch-type battery.

According to the present inventive concepts, the lithium secondary battery includes a safety member to provide a transfer path capable of easily emitting heat and current to an outside when an inner short circuit occurs in the battery. Therefore, a safety issue including ignition and explosion of the battery may be prevented.

### BRIEF DESCRIPTION OF THE DRAWINGS

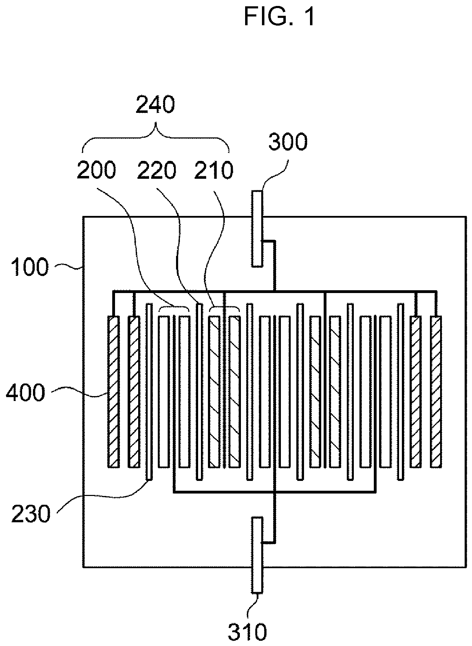

Example embodiments will be more clearly understood from the following detailed description taken in conjunction with the accompanying drawings. FIG. 1 represents non-limiting, example embodiments as described herein:
FIG. 1 is a schematic cross-sectional view illustrating a lithium secondary battery in accordance with example embodiments.

### DETAILED DESCRIPTION OF THE EMBODIMENTS

According to example embodiments of the present inventive concepts, a lithium secondary battery includes an exterior case, a jelly roll including a plurality of electrode plates and a separation layer interposed between the electrode plates, and a conductive plate in the exterior case, one end of the conductive plate being electrically connected to an electrode tab. The conductive plate may provide a transfer path capable of easily emitting heat and current to an outside when an inner short circuit occurs in the battery. Therefore, a safety issue including ignition and explosion of the battery may be overcome.

The term used herein "conductive" may include a meaning of "electrically conductive."

Hereinafter, exemplary embodiments of the present invention will be described in detail with reference to the accompanying drawings. However, since the drawings attached to the present disclosure are only given for illustrating one of various embodiments of present invention to easily understand the technical spirit of the present invention with the detailed descriptions below, it should not be construed as limiting the present invention.

FIG. 1 is a schematic cross-sectional view illustrating a lithium secondary battery in accordance with example embodiments.

Referring to FIG. 1, the lithium secondary battery comprises a jelly roll 240 that may be accommodated in an exterior case 100. The jelly roll 240 includes electrode plates 200 and 210, and a separation layer 220 interposed between the electrode plates 200 and 210. The lithium secondary battery further includes a conductive plate 400 electrically connected to an electrode tab 300.

In some embodiments, the lithium secondary battery may include the conductive plate 400 on at least one end of the jelly roll 240 so that current and high heat generated by an internal short circuit due to a penetration may be dispersed to an outside through the electrode tab 300 connected to the conductive plate 400. Thus, a temperature increase may be suppressed to improve a safety of the battery.

Preferably, the conductive plate 400 may be disposed at both ends (e.g., both lateral sides) of the jelly roll 240 so that the safety of the battery may be also secured from a penetration through a periphery of the jelly roll 240.

The conductive plate 400 may include an electrically conductive material widely used in the related art. For example, the conductive plate 400 may include a metal, preferably, copper or aluminum. However, the material of the conductive plate 400 is not specifically limited.

The conductive plate 400 may also have a thermal conductivity. In this case, the conductive plate 400 may serve as a medium for an electrical conduction, and also provide a path for externally discharging a heat when an internal short circuit occurs due to the penetration. Thus, a temperature increase in the battery may be effectively suppressed. In this aspect, the conductive plate 400 may preferably include the metal.

A thickness of the conductive plate 400 may not be limited to a specific range. Preferably, the thickness of the conductive plate 400 may be in a range from about 1 µm to about 20µm.

The current and heat may be effectively dispersed through the conductive plate 400 within the thickness range above. If the thickness of the conductive plate 400 is less than about 1 µm, an efficiency of current and heat transfer may be reduced. If the thickness of the conductive plate 400 exceeds about 20µm, an electrical conductivity and an energy density may be reduced and the current caused by the internal short circuit may not be rapidly dispersed.

In some embodiments, the conductive plate 400 may have a multi-layered structure. For example, the conductive plate 400 may include 2 to 5 sheets. In this case, when an electrode penetration occurs, a cross-section of the conductive plate 400 which may contact a penetrating object, and through which a current and heat may be transferred may increase. Thus, an efficiency of discharging the current and heat via the electrode tab 300 may be improved. Additionally, the conductive plate 400 having the multi-layered structure may prevent the penetration object more effectively relatively to the conductive plate 400 having a single-layered structure.

In some embodiments, the conductive plate 400 may include a plurality of through holes. The through holes may support an electrolyte when the electrolyte is injected in the lithium secondary battery. Thus, the jelly roll 240 may be immersed in the electrolyte, and the conductive plate 400 may also support the electrolyte via the through holes. For example, the electrolyte may be injected in an area around the conductive plate 400, and thus conductive plate 400 may be at least partially immersed in the electrolyte via the through holes. Therefore, an injection amount of the electrolyte may be increased due to the conductive plate 400 including the through holes so that a long term reliability of the lithium secondary battery may be enhanced.

The through hole formed in the conductive plate 400 may have a circular or polygonal cross-section.

The conductive plate 400 may be electrically connected to the electrode tab 300 and 310. FIG. 1 illustrates that the conductive plate 400 is connected to one of the electrode tabs 300 and 310 (i.e., an upper electrode tab 300). However, the conductive plate 400 may be electrically connected to at least one of the electrode tabs 300 and 310.

Current collectors of the same polarity in the electrode plates 200 and 210 may be integrally combined at ends thereof to be coupled to one of the electrode tabs 300 and 310. For example, the electrode conductive plate 400 may be integrally combined with the current collectors of at least one polarity to be coupled to at least one of the electrode tables 300 and 310. In this case, a plurality of the conductive plates 400 may be coupled to one of the electrode tabs 300 and 310, or may be divided to be coupled to both electrode tabs 300 and 310.

In some embodiments, the electrode plates may include cathode plates 200 and anode plates 210. The cathode plates 200 and the anode plates 210 may be alternately arranged with respect to the separation layer 230 in the jelly roll 240. In example embodiments, the jelly roll 240 may be accommodated in the exterior case 100, and the conductivity plate 400 may be disposed on at least one end of the jelly roll 240. The separation layer 230 may be disposed at a periphery of the jelly roll 240 to be in contact with the conductive plate 400. Accordingly, a direct contact between the conductive plate 400 and the electrode plates 200 and 210 may be avoided. Specifically, the separation layer 230 may be interposed between the conductive plate 400 and an outermost electrode of the jelly roll 240.

In some embodiments, the outermost electrodes of the jelly roll 240 may be the electrode of the same type (e.g., of the same polarity). The outermost electrode may be the cathode plate 200 or the anode plate 210, preferably the cathode plate 200.

The cathode plate 200 and the anode plate 210 may be formed by coating a cathode active material and an anode active material, respectively, on at least one surface of the current collector. The cathode active material and the anode active material may include active materials widely known in the related art.

The anode active material may include any material commonly used in the related art without particular limitation thereof. For example, , carbon-based materials such as crystalline carbon, amorphous carbon, carbon composite, carbon fiber, etc., a lithium-based metal, alloys of lithium and other elements, silicon, or tin may be used. The amorphous carbon may include, for example, hard carbon, cokes, mesocarbon microbead (MCMB) calcined at a temperature of 1500°C or less, mesophase pitch-based carbon fiber (MPCF), or the like. The crystalline carbon may include a graphite-based material, for example, natural graphite, graphite coke, graphite MCMB, graphite MPCF, or the like. Other elements used together with lithium to form an alloy may include, for example, aluminum, zinc, bismuth, cadmium, antimony, silicon, lead, tin, gallium or indium.

The cathode active material may include any material commonly used in the related art without particular limitation thereof. For example, a composite oxide containing lithium and at least one of cobalt, manganese or nickel may be preferably used. In some embodiments, lithium-containing compounds represented by the following formulae may be used.

LiₓMn_{1-y}M_{y}A₂ (1)

LiₓMn_{1-y}M_{y}O_{2-z}X_{z} (2)

LiₓMn₂O_{4-z}X_{z} (3)

LiₓMn_{2-y}M_{y}M'_{z}A₄ (4)

LiₓCo_{1-y}M_{y}A₂ (5)

LiₓCo_{1-y}M_{y}O_{2-z}X_{z} (6)

LiₓNi_{1-y}M_{y}A₂ (7)

LiₓNi_{1-y}M_{y}O_{2-z}X_{z} (8)

LiₓNi_{1-y}Co_{y}O_{2-z}X_{z} (9)

LiₓNi_{1-y-z}CoyM_{z}A_{α} (10)

LiₓNi_{1-y-z}Co_{y}M_{z}O_{2-α}X_{α} (11)

LiₓNi_{1-y-z}Mn_{y}M_{z}A_{α} (12)

LiₓNi_{1-y-z}Mn_{y}M_{z}O_{2-α}X_{α} (13)

In the formulae above, 0.9≤x≤1.1, 0≤y≤0.5, 0≤z≤0.5, 0≤α≤2, and M and M' may be the same as or different from each other. M and M' may be selected from Mg, Al, Co, K, Na, Ca, Si, Ti, Sn, V, Ge, Ga, B, As, Zr, Mn, Cr, Fe, Sr, V or rare earth elements. A may be selected from O, F, S or P, and X may be selected from F, S or P.

A cathode active material layer and an anode active material layer may further include a binder, a conductive agent, a dispersive agent, or the like, commonly known in the related art. The above components may be mixed and stirred together with a solvent to obtain a slurry. The slurry may be coated and pressed on the current collector, and may be dried to form the electrode active material layer.

The collector may include a metal having high conductivity and capable of being easily coated with a mixture of the cathode or anode active materials without reactivity in a voltage range of the battery.

An anode collector may include copper or an alloy of copper, but it is not limited thereto. In some embodiments, the anode collector may include: stainless steel, nickel, copper, titanium or an alloy thereof; copper or stainless steel being subjected to a surface treatment with carbon, nickel, titanium or silver, or the like.

A cathode collector may include aluminum or an alloy of aluminum, but it is not limited thereto. In some embodiments, the cathode collector may include stainless steel, nickel, aluminum, titanium or an alloy thereof; aluminum or stainless steel being subjected to a surface treatment with carbon, nickel, titanium or silver, or the like.

A shape of the current collector is not particularly limited, and the current collector may have shapes commonly known in the related art. For example, a planar collector, a hollow collector, a wire type collector, a wound wire type collector, a wound sheet type collector, a mesh type current collector, or the like may be used.

The separation layer 230 may be interposed between the cathode plate 200 and the anode plate 210 such that the cathode plate 200 and the anode plate 210 may be insulated from each other. The separation layer 230 may include an insulation material commonly known in the related art. Preferably, the separation layer 230 may be formed from a porous membrane that may allow ions to move between the cathode plate 200 and the anode plate 210.

For example, the separation layer 230 may include a thin insulation film having high ion permeability and mechanical strength. In some embodiments, an olefin polymer having chemical resistance and hydrophobicity such as polypropylene; a sheet or non-woven fabric formed of a glass fiber or polyethylene, etc., may be used.

The separation layer 230 may further include an inorganic coating layer containing inorganic particles on at least one surface thereof so that safety of the separation layer 230 and the battery may be further improved.

The inorganic coating layer may be formed of the inorganic particles and a binder. Non-limiting examples of the inorganic particles may include alumina, aluminum hydroxide, silica, barium oxide, titanium oxide, magnesium oxide, magnesium hydroxide, clay, a glass powder, boehmite or a mixture thereof. In some embodiments, alumina may be used as the inorganic particles so that the separation layer 230 may have an excellent strength, and effectively prevent a short circuit caused by dendrite and foreign matters.

When using a solid electrolyte, e.g., a polymer as the electrolyte, the solid electrolyte may also serve as the separation layer 230. Preferably, the solid electrolyte may include a polyethylene film, a polypropylene film or a multi-layered film prepared by a combination thereof; a polymer film such as polyvinylidene fluoride, polyethylene oxide, polyacrylonitrile or polyvinylidene fluoride hexafluoropropylene copolymer, or the like, but it is not limited thereto.

The jelly roll 240 and the conductive plate 400 may be housed in the exterior case 100 together with a non-aqueous electrolyte to prepare the lithium secondary battery.

The exterior case 100 may include a material commonly known in the related art without particular limitation thereof. For example, the exterior case 100 may be a can, pouch, or the like. For example, the pouch may be formed in a plurality of flexible layers, and may include, for example, a thermal adhesion layer, a metal layer, and a polymer resin layer.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Preparation Example

### <Cathode Plate>

LiNi_{0.8}Co_{0.1}Mn_{0.1}O₂ as a cathode active material, carbon black as a conductive agent, and polyvinylidene fluoride (PVDF) as a binder were used in a weight ratio of 92:5:3, respectively, to prepare a cathode slurry. The cathode slurry was coated on an aluminum substrate, followed by drying and pressing to prepare a cathode electrode.

### <Anode Plate >

92% by weight ('wt%') of natural graphite as an anode active material, 3 wt% of styrene butadiene rubber + carboxymethyl cellulose (SBR + CMC) as a binder, and 5 wt% of amorphous graphite as a conductive agent were mixed to prepare an anode slurry. The slurry was coated on a copper substrate, followed by drying and pressing to prepare an anode electrode.

### Example 1

The anode plates and the cathode plates obtained by the above Preparation Example were alternately stacked such that a polyethylene separation layer was interposed therebetween, and an outermost electrode was the cathode plate to form a jelly roll.

Four sheets of conductive plates (copper plates), each of which had a thickness of 12µm were disposed at both lateral ends of the jelly roll. The separation layer was arranged to be in contact with the conductive plate. Each conductive plate was connected to an anode tab.

The jelly roll combined with the conductive plates was housed in a pouch, and an electrolyte was injected therein and sealed to achieve a lithium secondary battery.

The electrolyte used herein was formed by preparing 1 M LiPF₆ solution with a mixed solvent of ethylene carbonate (EC) / ethylmethyl carbonate (EMC) / diethyl carbonate (DEC) (25/45/30; volume ratio), and adding 1wt% of vinylene carbonate (VC), 0.5 wt% of 1,3-propene sultone (PRS), and 0.5 wt% of lithium bis(oxalato)borate (LiBOB) thereto.

### Example 2

The anode plates and the cathode plates obtained by the above Preparation Example were alternately stacked such that a polyethylene separation layer was interposed therebetween, and an outermost electrode was the cathode plate to form a jelly roll. Four sheets of conductive plates (aluminum plates), each of which had a thickness of 12µm were disposed at both lateral ends of the jelly roll. The separation layer was arranged to be in contact with the conductive plate. Each conductive plate was connected to a cathode tab.

The subsequent process the same as that described in Example 1 was performed to form a lithium secondary battery.

### Example 3

The anode plates and the cathode plates obtained by the above Preparation Example were alternately stacked such that a polyethylene separation layer was interposed therebetween, and an outermost electrode was the cathode plate to form a jelly roll. Four sheets of conductive plates (copper plates), each of which had a thickness of 12µm were disposed at one lateral end of the jelly roll. Four sheets of conductive plates (aluminum plates), each of which had a thickness of 12µm were disposed at the other lateral end of the jelly roll. The separation layer was arranged to be in contact with the conductive plate at both lateral ends. The copper plate was connected to an anode tab, and the aluminum plate was connected to a cathode tab.

The subsequent process the same as that described in Example 1 was performed to form a lithium secondary battery.

### Comparative Example 1

A lithium secondary battery was formed by processes the same as those described in Example 1 except that the conductive plate was omitted.

### Experimental Example: Evaluation of Penetration Safety

To evaluate penetration safety for the lithium secondary batteries, nine samples from each of Examples and Comparative Example were prepared, and a nail penetration test was performed at different state of charge (SOC) values using a stainless steel nail having a diameter of 5mm. The penetration safety was evaluated according to the following standards for evaluation, and the evaluated results are shown in Table 1 below.

### <Standards for evaluation, EUCAR Hazard Level>

L1: no abnormality in a battery performance occurred
L2: irreversible damage occurred in a battery performance
L3: weight of electrolyte in the battery was decreased by less than 50%
L4: weight of electrolyte in the battery was decreased by 50% or more
L5: ignition or explosion occurred in the battery

**Table 1**

| State of Charge (SOC) | Results of nail penetration test (EUCAR Hazard Level) | | | |
|---|---|---|---|---|
| | Example 1 | Example 2 | Example 3 | Comparative Example |
| 60% | 3L4 | 3L4 | 3L4 | 3L5 |
| 50% | 3L4 | 3L4 | 3L4 | 3L5 |
| 40% | 3L4 | 3L4 | 3L4 | 3L4 |

For example, "3L4" means that three samples were evaluated as L4 (a numeral before the EUCAR Hazard Level is the number of the evaluated samples).

Referring to Table 1, the lithium secondary battery according to Examples showed excellent penetration safety.

## Claims

1. A lithium secondary battery, comprising:
an exterior case;
a jelly roll housed in the exterior case, the jelly roll including a plurality of electrode plates and a separation layer interposed between the electrode plates;
an electrode tab combining the electrode plates; and
a conductive plate housed in the exterior case, the conductive plate being electrically connected to the electrode tab.

2. The lithium secondary battery according to claim 1, wherein the conductive plate is disposed on at least one lateral side of the jelly roll.

3. The lithium secondary battery according to claim 1, wherein the conductive plate has a thermal conductivity.

4. The lithium secondary battery according to claim 1, wherein a thickness of the conductive plate is in a range from 1 µm to 20µm.

5. The lithium secondary battery according to claim 1, wherein the conductive plate includes a plurality of through holes.

6. The lithium secondary battery according to claim 1, wherein the lithium secondary battery is a pouch-type battery.
